(19) Europäisches Patentamt / European Patent Office / Office européen des brevets

(11) **EP 2 589 224 B1**

(12) **FASCICULE DE BREVET EUROPEEN**

(45) Date de publication et mention de la délivrance du brevet:
**04.11.2020 Bulletin 2020/45**

(21) Numéro de dépôt: **11734167.7**

(22) Date de dépôt: **16.06.2011**

(51) Int Cl.:
*H04N 19/132* (2014.01)    *H04N 19/593* (2014.01)
*H04N 19/18* (2014.01)    *H04N 19/48* (2014.01)
*H04N 19/895* (2014.01)

(86) Numéro de dépôt international:
**PCT/FR2011/051383**

(87) Numéro de publication internationale:
**WO 2012/001257 (05.01.2012 Gazette 2012/01)**

(54) **PROCÉDÉS ET DISPOSITIFS DE CODAGE ET DE DÉCODAGE D'AU MOINS UNE IMAGE METTANT EN OEUVRE UNE ESTIMATION DANS LE DOMAINE TRANSFORMÉ ET PROGRAMME D'ORDINATEUR CORRESPONDANT**

VERFAHREN UND VORRICHTUNGEN ZUM KODIEREN UND DEKODIEREN VON MINDESTENS EINEM BILD UNTER VERWENDUNG DER SCHÄTZUNG IM TRANSFORMIERTEN BEREICH UND ENTSPRECHENDES COMPUTERPROGRAMM

METHODS AND DEVICES FOR ENCODING AND DECODING AT LEAST ONE IMAGE USING ESTIMATION IN THE TRANSFORMED DOMAIN AND CORRESPONDING COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.06.2010 FR 1055260**

(43) Date de publication de la demande:
**08.05.2013 Bulletin 2013/19**

(73) Titulaire: **ORANGE**
**75015 Paris (FR)**

(72) Inventeurs:
* **AMONOU, Isabelle**
  **35510 Cesson Sevigne (FR)**
* **MOINARD, Matthieu**
  **35510 Cesson Sevigne (FR)**
* **DUHAMEL, Pierre**
  **92350 Le Plessis Robinson (FR)**
* **BRAULT, Patrice**
  **91440 Bures sur Yvette (FR)**

(74) Mandataire: **Vidon Brevets & Stratégie**
**16B, rue de Jouanet**
**BP 90333**
**35703 Rennes Cedex 7 (FR)**

(56) Documents cités:
**EP-A1- 1 081 958    EP-A2- 2 451 158**
**EP-B1- 0 843 484**

* **PURI A ET AL: "IMPROVEMENTS IN DCT BASED VIDEO CODING", PROCEEDINGS OF THE INTERNATIONAL SOCIETY FOR OPTICAL ENGINEERING (SPIE), SPIE, USA, vol. 3024, no. PART 01, 12 février 1997 (1997-02-12), pages 676-688, XP000199866, ISSN: 0277-786X, DOI: DOI:10.1117/12.263279**
* **SEE C-T ET AL: "EFFICIENT ENCODING OF DC COEFFICIENTS IN TRANSFORM CODING OF IMAGES USING JPEG SCHEME", SIGNAL IMAGE AND VIDEO PROCESSING. SINGAPORE, JUNE 11 -14, 1991; [PROCEEDINGS OF THE INTERNATIONAL SYMPOSIUM ON CIRCUITS AND SYSTEMS], NEW YORK, IEEE, US, vol. 1 OF 05, 11 juin 1991 (1991-06-11), pages 404-407, XP000384794, DOI: DOI:10.1109/ISCAS.1991.176359 ISBN: 978-0-7803-0050-7**
* **CHAN T ET AL: "Mathematical Models for Local Non-Texture Inpaintings", SIAM JOURNAL OF APPLIED MATHEMATICS, XX, XX, 1 janvier 2001 (2001-01-01), pages 1-31, XP002335088, cité dans la demande**

- **BUADES A ET AL: "A review of image denoising algorithms, with a new one", MULTISCALE MODELING & SIMULATION, SOCIETY FOR INDUSTRIAL AND APPLIED MATHEMATICS, US, vol. 4, no. 2, 18 juillet 2005 (2005-07-18), pages 490-530, XP002496485, ISSN: 1540-3459, DOI: DOI:10.1137/040616024**

**Description**

## 1. Domaine de l'invention

Le domaine de l'invention est celui du codage et du décodage d'images ou de séquences d'images, et notamment de flux vidéo.

Plus précisément, l'invention concerne la compression d'images ou de séquences d'images utilisant une représentation par blocs des images.

L'invention peut notamment s'appliquer au codage d'images mis en œuvre dans les codeurs image de type JPEG par exemple, ou au codage de vidéos mis en œuvre dans les codeurs vidéo actuels (MPEG, H.264, etc et leurs amendements) ou à venir (ITU-T/ISO HEVC), et au décodage correspondant.

## 2. Art antérieur

Les images et séquences d'images numériques occupent beaucoup d'espace en termes de mémoire, ce qui nécessite, lorsque l'on transmet ces images, de les compresser afin d'éviter les problèmes d'encombrement sur le réseau utilisé pour cette transmission. En effet, le débit utilisable sur ce réseau est généralement limité.

On connaît déjà de nombreuses techniques de compression de données vidéo. Parmi celles-ci, la technique H.264 met en œuvre une prédiction de pixels d'une image courante par rapport à d'autres pixels appartenant à la même image (prédiction intra) ou à une image précédente ou suivante (prédiction inter).

Plus précisément, selon cette technique H.264, des images I sont codées par prédiction spatiale (prédiction intra), et des images P et B sont codées par prédiction temporelle par rapport à d'autres images I, P ou B (prédiction inter), codées/décodées à l'aide d'une compensation en mouvement par exemple.

Pour ce faire, les images sont découpées en macroblocs, qui sont ensuite subdivisés en blocs, constitués de pixels. Chaque bloc ou macrobloc est codé par prédiction intra ou inter images.

Classiquement, le codage d'un bloc courant est réalisé à l'aide d'une prédiction du bloc courant, dit bloc prédit, et d'un résidu de prédiction, correspondant à une différence entre le bloc courant et le bloc prédit. Ce résidu de prédiction, encore appelé bloc résiduel, est transmis au décodeur, qui reconstruit le bloc courant en ajoutant ce bloc résiduel à la prédiction.

La prédiction du bloc courant est établie à l'aide d'informations déjà reconstruites (blocs précédents déjà codés/décodés dans l'image courante, images préalablement codées dans le cadre d'un codage vidéo, etc). Le bloc résiduel obtenu est alors transformé, par exemple en utilisant une transformée de type DCT (transformée en cosinus discrète). Les coefficients du bloc résiduel transformé sont alors quantifiés, puis codés par un codage entropique.

Le décodage est fait image par image, et pour chaque image, bloc par bloc ou macrobloc par macrobloc. Pour chaque (macro)bloc, les éléments correspondants du flux sont lus. La quantification inverse et la transformation inverse des coefficients du(des) bloc(s) résiduel(s) associé(s) au (macro)bloc sont effectuées. Puis, la prédiction du (macro)bloc est calculée et le (macro)bloc est reconstruit en ajoutant la prédiction au(x) bloc(s) résiduel(s) décodé(s).

Selon cette technique de compression, on transmet donc des blocs résiduels transformés, quantifiés, et codés, au décodeur, pour lui permettre de reconstruire la ou les image(s) d'origine.

Malheureusement, lors de cette transmission, il est possible que certains coefficients de ces blocs résiduels soient altérés, voire perdus, notamment lorsque la transmission est bruitée. L'utilisation de ces blocs résiduels «dégradés» lors de la reconstruction de l'image d'origine conduit donc à une image de mauvaise qualité.

Pour remédier à ce problème, il a notamment été proposé de restaurer aléatoirement des coefficients ou ensemble de coefficients perdus dans un bloc transformé par ondelettes ou DCT. Les coefficients ainsi restaurés permettent de restituer une image acceptable au décodeur.

Selon ces techniques, on détecte au cours d'une première phase la position des coefficients perdus. Ensuite, au cours d'une deuxième phase, on restaure ces coefficients en fonction du voisinage (autres coefficients ou voisinage spatial dans l'image reconstruite).

La restauration des coefficients est donc mise en œuvre au niveau du décodeur. En d'autres termes, ces techniques proposent un post-traitement visant à reconstruire un signal acceptable pour le décodeur.

Un inconvénient de ces techniques de restauration est qu'elles sont coûteuses en termes de ressources pour le décodeur. En effet, le décodeur doit d'abord identifier la position des coefficients perdus avant de pouvoir commencer la phase de restauration. Le décodeur doit donc soit procéder « en aveugle », soit disposer d'un module d'identification de position des coefficients perdus pour pouvoir restaurer les coefficients.

Des techniques d'art antérieur qui sélectionnent des sous-ensembles de coefficients de blocs transformés afin d'améliorer l'efficacité de codage sont divulguées dans EP0843484 B1 et EP 1081958 A1.

EP0843484 B1 divulgue un procédé de codage qui met en oeuvre différents modes de prédiction pour les blocs de coefficient transformés. Ces modes de prédictions sélectionnent des sous-ensembles de coefficients du bloc

EP 2 589 224 B1

transformé (p.ex. le coefficient DC, le coefficient DC et les coefficients AC de la première colonne, etc.) et déterminent une prédiction pour ces coefficients sélectionnés.

EP1081958 A1 divulgue un procédé de codage vidéo qui sélectionne un sous-ensemble de n coefficients qui sont ensuite restaurés.

Il existe donc un besoin pour une nouvelle technique de codage/décodage d'images permettant d'améliorer la qualité du signal reconstruit tout en simplifiant le traitement mis en œuvre au niveau du décodeur.

## 3. Exposé de l'invention

L'invention est définie par les revendications 1-8 ci-attachées.

L'invention propose une solution nouvelle, sous la forme d'un procédé de codage d'au moins une image découpée en blocs mettant en œuvre, pour au moins un bloc courant, une étape de transformation dudit bloc courant du domaine spatial vers un domaine transformé, délivrant un bloc transformé, ledit bloc transformé étant formé d'un ensemble de coefficients représentatifs dudit bloc courant, dits coefficients originaux.

Selon l'invention, le procédé de codage met en œuvre une étape de sélection d'un sous-ensemble de coefficients originaux parmi ledit ensemble, et, pour au moins un coefficient original dudit sous-ensemble, les étapes suivantes :

- estimation dudit coefficient original, délivrant un coefficient estimé dans ledit domaine transformé ;
- détermination d'un résidu de coefficient, par comparaison dudit coefficient original et dudit coefficient estimé ;
- codage dudit résidu de coefficient.

Ainsi, l'invention repose sur une approche nouvelle et inventive du codage, reposant sur l'estimation (prédiction) de certains coefficients dans le domaine transformé.

En particulier, le bloc courant est

- un bloc résiduel, obtenu par comparaison d'un bloc d'une image à coder dans le domaine spatial et d'un bloc prédit obtenu par prédiction de ce bloc à coder

Le bloc courant étant un bloc résiduel, l'invention propose une «prédiction à double niveau » : une première prédiction est effectuée de manière classique dans le domaine spatial pour « prédire » un bloc à coder et déterminer un bloc résiduel, puis une deuxième prédiction est effectuée dans le domaine transformé pour « estimer » certains coefficients du bloc résiduel et déterminer des résidus de coefficients. L'invention s'applique ainsi, par exemple, au codage vidéo H264.

Bien que ces étapes d'estimation d'un coefficient original, détermination d'un résidu de coefficient, et codage du résidu pourraient s'appliquer à l'ensemble des coefficients représentatifs du bloc courant, il est préférable de ne les appliquer qu'à seulement certains coefficients, sélectionnés pour former le sous-ensemble.

En effet, certains coefficients sont statistiquement à une valeur nulle, une fois quantifiés, en fonction du mode de prédiction, du débit, ctc . Par conséquent, ne pas les estimer permet de gagner du temps de traitement, et évite d'estimer un coefficient non nul alors que sa valeur d'origine est nulle (dans ce cas, on dégraderait les performances de compression).

De plus, certains coefficients sont utilisés comme point « d'ancrage » ou de référence (par exemple le coefficient DC). En d'autres termes, grâce à la valeur d'origine de ces coefficients, l'estimation des autres coefficients est meilleure. Dans ce cas, il ne semble pas souhaitable d'estimer ces coefficients de référence.

Ainsi, la solution proposée offre un traitement simple et nécessitant peu de ressources supplémentaires, puisqu'elle est mise en œuvre uniquement pour quelques coefficients sélectionnés parmi l'ensemble des coefficients représentatifs du bloc courant.

En particulier, pour une position donnée dans le bloc transformé, la différence entre un coefficient original et un coefficient estimé (encore appelée résidu de coefficient) est codée, de façon à pouvoir reconstruire exactement le coefficient identifié par cette position au décodeur.

Selon l'invention, le codage et la transmission d'un résidu de coefficient en lieu et place d'un coefficient original est moins coûteuse (l'énergie associée au résidu de coefficient étant plus faible que l'énergie associée au coefficient original) et permet d'optimiser le débit de transmission pour une même qualité de transmission.

L'invention propose ainsi une nouvelle technique de codage (et de décodage) intégrant une technique de restauration du signal, dont un objectif est de réduire la quantité d'information à transmettre pour une qualité équivalente.

On rappelle que selon beaucoup de techniques de l'art antérieur, au contraire, le codage n'était pas modifié. Le traitement du signal était mis en œuvre au niveau du décodeur uniquement, pour restaurer un signal dégradé lors de la transmission.

Selon un exemple non couvert par l'invention, l'étape de sélection sélectionne les coefficients originaux localisés

4

à une position prédéterminée dans le bloc transformé.

De cette façon, le décodeur peut identifier immédiatement les positions des coefficients originaux à reconstruire, et il n'est pas nécessaire que le codeur insère une information spécifique pour signaler les positions des coefficients originaux du sous-ensemble.

Ceci permet de limiter la quantité d'informations transmises. Selon un mode de réalisation, l'étape de sélection sélectionne les coefficients originaux selon une direction de prédiction du bloc courant.

Ainsi, le nombre et/ou la position des coefficients du sous-ensemble ne sont pas figés, et peuvent évoluer selon ce critère Dans des exemples non couverts par l'invention, les coefficients originaux peuvent être sélectionnés en fonction du débit de transmission : plus le débit est élevé, plus le nombre de coefficients composant le sous-ensemble est important. A l'inverse, quand le débit diminue, beaucoup de coefficients originaux sont nuls, et n'ont pas besoin d'être transmis. Il n'est donc pas utile de les sélectionner et de les estimer.

Selon l'invention les coefficients originaux sont sélectionnés en tenant compte de leur voisinage. Par exemple, la position des coefficients à sélectionner pour former le sous-ensemble dépend de la direction de prédiction spatiale utilisée pour prédire le bloc à coder. En effet, la direction de prédiction choisie permet de regrouper les coefficients représentant les plus hautes fréquences sur une même région du bloc transformé (par exemple une même colonne pour une direction de prédiction horizontale, ou une même ligne pour une direction de prédiction verticale).

Selon ce mode de réalisation, le décodeur doit pouvoir retrouver le nombre et la position des coefficients originaux à reconstruire.

Par exemple, le décodeur connaît la direction de prédiction utilisée pour la prédiction spatiale, et peut en déduire la position et le nombre de coefficients à prédire.

Selon un autre exemple, il est possible d'insérer, au niveau du codage, une information signalant une position des coefficients originaux du sous-ensemble dans un signal représentatif de la ou des des image(s).

Cette modification du signal permet à un décodeur d'identifier immédiatement les positions des coefficients originaux à reconstruire.

Selon l'invention, l'étape d'estimation met en œuvre les étapes suivantes :

- affectation d'une valeur nulle aux coefficients originaux du sous-ensemble, délivrant un bloc transformé modifié ;
- restauration du bloc transformé modifié.

L'invention propose ainsi de restaurer le signal au niveau du codage, ce qui permet de réduire la quantité d'information à transmettre pour une qualité équivalente.

L' étape de restauration met en œuvre une technique de minimisation de la variation totale.

En particulier, l'étape de restauration met en œuvre au moins une itération des sous-étapes suivantes :

- transformation du bloc transformé modifié du domaine transformé vers le domaine spatial, délivrant un bloc modifié dans le domaine spatial ;
- addition du bloc modifié et du bloc prédit dans le domaine spatial correspondant, délivrant un bloc modifié reconstruit ;
- détermination dans le domaine spatial, d'une courbure d'une image reconstruite, comprenant le bloc modifié reconstruit ;
- mise à jour des coefficients originaux du sous-ensemble, tenant compte de la courbure, transformée du domaine spatial vers le domaine transformé, et du bloc transformé modifié, délivrant un nouveau bloc transformé modifié.

Selon une variante avantageuse, l'étape de restauration traite lesdits coefficients originaux les uns après les autres, selon un ordre de fréquence croissante.

De cette façon, on commence par estimer les coefficients originaux représentant des oscillations basse fréquence, et on termine par une estimation des coefficients originaux représentant des oscillations haute fréquence.

Cette variante permet de traiter les coefficients originaux de manière séquentielle, et donc de bénéficier à chaque itération d'une reconstruction plus complète du nouveau bloc transformé modifié.

De plus, elle offre de meilleurs résultats en termes de compression selon un critère débit-distorsion.

Dans un autre mode de réalisation, l'invention concerne un dispositif de codage d'au moins une image découpée en blocs selon la revendication 4.

Un tel codeur est notamment adapté à mettre en œuvre le procédé de codage décrit précédemment. Il s'agit par exemple d'un codeur image de type JPEG, ou d'un codeur vidéo de type H.264.

Ce dispositif de codage pourra bien sûr comporter les différentes caractéristiques relatives au procédé de codage selon l'invention. Ainsi, les caractéristiques et avantages de ce codeur sont les mêmes que ceux du procédé de codage, et ne sont pas détaillés plus amplement.

Un autre aspect de l'invention concerne un procédé de décodage d'au moins une image codée selon la revendication 5.

L'invention permet ainsi de recevoir un résidu de coefficient et de reconstruire le coefficient original correspondant, plutôt que recevoir le coefficient original directement. Pour ce faire, le procédé de décodage met ainsi en œuvre la même étape d'estimation qu'au codage.

Les caractéristiques et avantages de ce procédé de décodage sont les mêmes que ceux du procédé de codage, et ne sont pas détaillés plus amplement.

En particulier, un tel procédé de codage comprend une étape de lecture, dans un signal représentatif de ladite moins une image codée, d'au moins une information signalant une position des coefficients originaux dudit sous-ensemble.

De cette façon, le décodeur sait immédiatement identifier les positions des coefficients originaux à reconstruire.

Dans un autre mode de réalisation, l'invention concerne un dispositif de décodage selon la revendication 7.

Un tel décodeur est notamment adapté à mettre en œuvre le procédé de décodage décrit précédemment. Il s'agit par exemple d'un décodeur image de type JPEG ou vidéo de type H.264.

Ce dispositif de décodage pourra bien sûr comporter les différentes caractéristiques relatives au procédé de décodage selon l'invention.

L'invention concerne encore un programme d'ordinateur comportant des instructions pour la mise en œuvre d'un procédé de codage et/ou d'un procédé de décodage tels que décrits précédemment, lorsque ce programme est exécuté par un processeur. Un tel programme peut utiliser n'importe quel langage de programmation. Il peut être téléchargé depuis un réseau de communication et/ou enregistré sur un support lisible par ordinateur.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1 présente les principales étapes mises en œuvre au codage selon l'invention ;
- la figure 2 illustre un exemple d'architecture d'un codeur selon la figure 1 ;
- la figure 3 illustre un bloc transformé de taille 8x8 ;
- la figure 4 présente un exemple d'algorithme d'estimation des coefficients ;
- la figure 5 présente les principales étapes mises en œuvre au décodage selon l'invention ;
- la figure 6 illustre un exemple d'architecture d'un décodeur selon la figure 5 ;
- les figures 7 et 8 présentent la structure simplifiée d'un codeur et d'un décodeur selon un mode de réalisation particulier de l'invention.

## 5. Description d'un mode de réalisation de l'invention

### 5.1 Principe général

Le principe général de l'invention repose sur la mise en œuvre, au niveau du codage et du décodage, d'une estimation, dans le domaine transformé, de certains coefficients d'un bloc courant. On note qu'un tel bloc courant correspond à un bloc résiduel, obtenu par comparaison d'un bloc d'une image à coder dans le domaine spatial et d'un bloc prédit obtenu par prédiction de ce bloc à coder.

Ainsi, selon l'invention, le bloc courant étant un bloc résiduel, l'invention propose de transformer ce bloc résiduel et de prédire (estimer) certains coefficients de ce bloc transformé. Cette estimation est mise en œuvre en utilisant les pixels du voisinage causal du bloc courant, qui peuvent eux-mêmes être obtenus à partir des coefficients du bloc courant transformé et des blocs voisins du bloc courant transformés.

De cette façon, il n'est pas nécessaire que le codeur transmette au décodeur l'ensemble des coefficients du bloc résiduel transformé, après quantification et codage. En effet, le codeur peut transmettre seulement certains coefficients du bloc résiduel transformé, puis éventuellement des résidus de coefficients permettant de reconstruire, au niveau du décodeur, les coefficients du bloc résiduel transformé non transmis. Ces résidus de coefficients sont obtenus en comparant les coefficients du bloc résiduel transformé, dits coefficients d'origine, aux coefficients obtenus lors de l'opération d'estimation.

L'invention propose ainsi une prédiction à deux niveaux, permettant d'estimer, au codeur et au décodeur, certains coefficients du bloc résiduel transformé, qui n'ont donc pas besoin d'être transmis au décodeur (seuls les résidus de coefficient correspondant à ces coefficients étant transmis au décodeur). On réalise de cette façon une compression plus efficace du signal en réduisant la quantité d'informations transmises.

On rappelle que, classiquement, le codage d'images ou de séquences d'images met en œuvre une transformation de l'image du domaine spatial vers un domaine transformé, dont le but est de modifier l'espace de représentation de l'information afin de la décorréler au maximum et de la regrouper sur un nombre minimum de coefficients signifiants avant d'aborder les opérations de quantification et codage entropique. Une telle transformation est par exemple de type transformée en cosinus discrète (DCT), transformée en sinus discrète (DST), transformée ondelettes, etc.

### 5.2 Fonctionnement du codeur

On décrit ci-après les principales étapes mises en œuvre par un codeur selon l'invention.

On considère par exemple qu'un tel codeur met en œuvre une transformation de type DCT, classiquement utilisée dans les codeurs image ou vidéo. Bien entendu, d'autres transformations peuvent être utilisées selon l'invention.

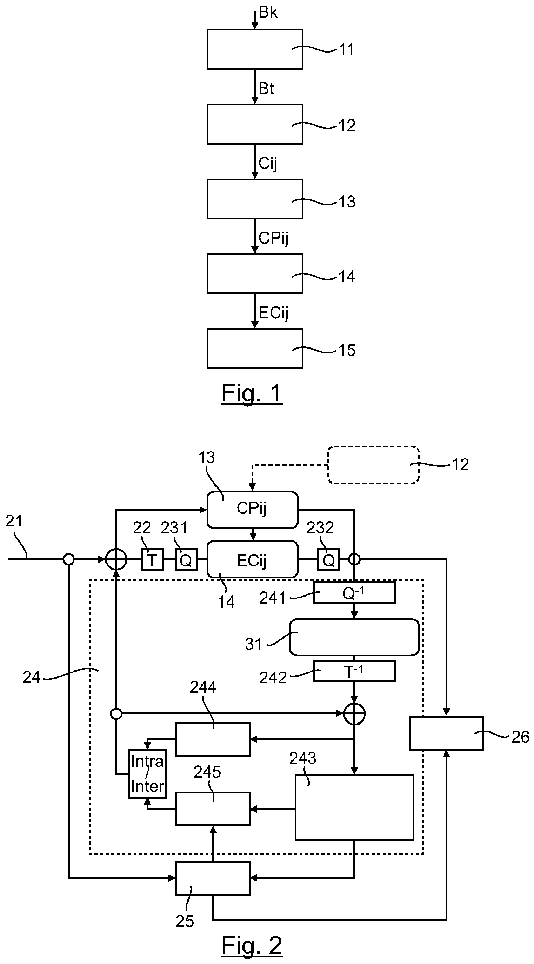

Ainsi, comme illustré en figure 1, un tel codeur (par exemple un codeur image ou vidéo) met en œuvre les étapes décrites ci-après, pour au moins un bloc courant Bk. Comme indiqué précédemment, le bloc courant peut être un bloc non-résiduel, correspondant à un ensemble de pixels de l'image à coder, ou un bloc résiduel, obtenu par comparaison d'un bloc à coder et d'un bloc prédit obtenu par prédiction du bloc à coder.

Au cours d'une étape de transformation 11, le bloc courant Bk est transformé du domaine spatial vers un domaine transformé, délivrant un bloc transformé Bt. Un tel bloc transformé est formé d'un ensemble de coefficients DCT représentatifs du bloc courant, dits coefficients originaux.

Le codeur met alors en œuvre une étape de sélection 12 d'un sous-ensemble de coefficients originaux parmi l'ensemble de coefficients DCT. Cette étape de sélection 12 permet de sélectionner certains coefficients originaux, en tenant notamment compte de leur position dans le bloc transformé Bt.

On traite alors de manière spécifique ces quelques coefficients originaux sélectionnés parmi l'ensemble des coefficients DCT formant le bloc transformé Bt.

Plus précisément, pour au moins un coefficient original Cij du sous-ensemble, le codeur met en œuvre les étapes suivantes :

- estimation (prédiction) 13 du coefficient original Cij, délivrant un coefficient estimé CPij dans le domaine transformé ;
- détermination 14 d'un résidu de coefficient ECij, par comparaison du coefficient original Cij et du coefficient estimé CPij ;
- codage 15 du résidu de coefficient ECij.

Les coefficients originaux du bloc transformé Bt n'appartenant pas au sous-ensemble obtenu à l'issue de l'étape de sélection 12 sont, quant à eux, codés de manière classique.

Le codage du bloc transformé Bt est donc obtenu en codant uniquement les résidus de coefficient pour les coefficients originaux appartenant au sous-ensemble, et en codant les autres coefficients originaux de manière classique.

L'invention propose ainsi de prédire (ou d'estimer), au codeur et au décodeur, certains coefficients originaux du bloc transformé, ce qui permet d'éviter la transmission de ces coefficients originaux au décodeur (en transmettant éventuellement le résidu de coefficient associé à ces coefficients originaux). Ceci permet de réaliser une compression plus efficace du signal représentatif de l'image ou la séquence d'images, en réduisant la quantité d'information codée, tout en permettant une reconstruction du signal identique. En effet, le résidu de coefficient, s'il est transmis, est moins coûteux que le coefficient original correspondant car son énergie est plus faible (si le coefficient original est bien prédit).

On décrit ci-après, en relation avec les figures 2 à 4, un mode de réalisation particulier de l'invention.

Plus précisément, la figure 2 illustre l'architecture d'un codeur vidéo de type H.264, modifié pour mettre en œuvre l'invention.

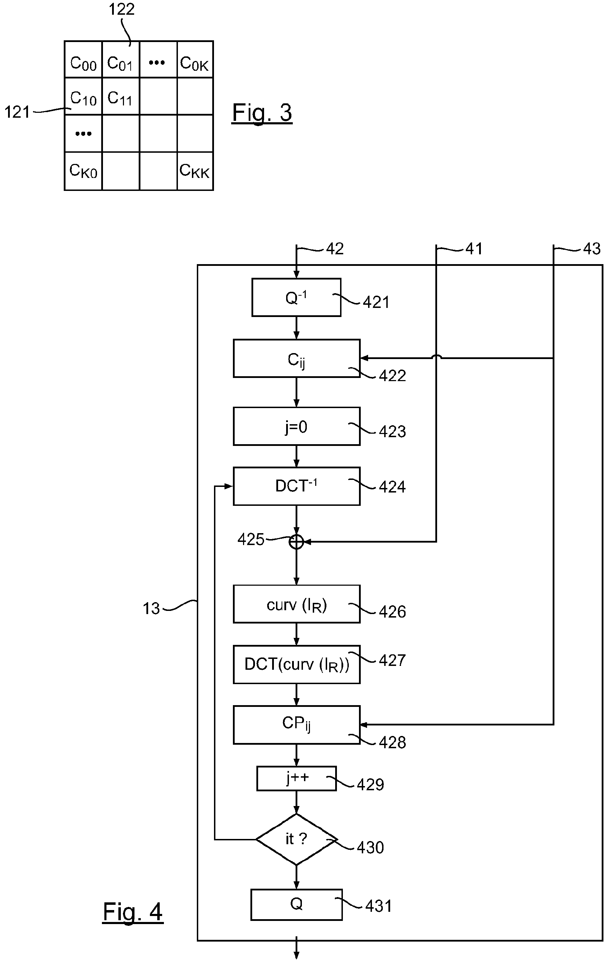

Un tel codeur prend en entrée une séquence vidéo 21, et met en œuvre des opérations classiques de transformation T 22 et de quantification Q 231. Dans le cas du codeur H.264, l'opération de transformation T 22 met en œuvre une transformée par DCT entière. A l'issue de ces opérations, on dispose donc d'un bloc transformé formé de (K+1)x(K+1) coefficients originaux $C_{ij}$ (quantifiés), comme illustré en figure 3 (par exemple 64 coefficients originaux si K = 7, ou 16 coefficients si K = 3), où i correspond à l'indice de la ligne du bloc transformé et *j* correspond à l'indice de la colonne du bloc transformé, $0 \leq i,j \leq K$.

Comme décrit en relation avec la figure 1, pour au moins un bloc transformé, on sélectionne 12 un sous-ensemble de coefficients originaux à estimer, en tenant notamment compte de leur position dans le bloc transformé, et on réalise une estimation 13 de ces coefficients originaux. On détermine ensuite (14) les résidus de coefficients, au cours d'une étape de compensation, au cours de laquelle on compare les coefficients originaux et les coefficients estimés. Une nouvelle étape de quantification Q 232 peut alors être mise en œuvre, avant l'opération de codage entropique 26.

Afin de disposer au codeur et au décodeur des mêmes informations de prédiction, le codeur intègre classiquement une boucle de décodage 24 dans sa boucle de codage.

Une telle boucle de décodage 24 met en œuvre des opérations classiques de quantification inverse $Q^{-1}$ 241, transformation inverse $T^{-1}$ 242, reconstruction d'images 243, prédiction intra 244 et/ou inter 245 (compensation en mouvement). Ces opérations sont bien connues de l'Homme du Métier, et décrites plus en détail dans la norme H.264 (H.264 JVT - ISO/IEC 14496-10 AVC - ITU-T Recommendation H.264, "Advanced video coding for generic audio-visual services", 11/07/2007) .

Selon l'invention, une telle boucle de décodage 24 intègre également une opération de compensation inverse 31, mise en œuvre préalablement à l'opération de transformation inverse $T^{-1}$ 242, au cours de laquelle on ajoute les résidus de coefficients aux coefficients estimés.

La séquence vidéo 21 et les images reconstruites par prédiction intra 244 et/ou inter 245 permettent de réaliser une estimation de mouvement 25, prise en compte pour le codage entropique 26. Ces opérations d'estimation de mouvement 25 et de codage entropique 26 sont classiques, et décrites plus en détail dans la norme H.264 précitée.

Selon ce mode de réalisation, l'invention réside donc plus particulièrement dans les étapes de sélection 12 d'un sous-ensemble de coefficients originaux à estimer, d'estimation 13 de ces coefficients originaux, et de détermination 14 des résidus de coefficients associés à ces coefficients, décrites ci-après plus en détail.

*A) Sélection des coefficients à estimer*

Plus précisément, l'étape de sélection 12 permet :

- soit de sélectionner les coefficients originaux localisés à une position prédéterminée dans le bloc transformé ;
- soit de sélectionner les coefficients originaux respectant un critère de codage prédéterminé.

En d'autres termes, le nombre et la position des coefficients originaux du sous-ensemble (encore appelés coefficients à estimer) peut être fixe ou variable.

On cherche ici à trouver un bon compromis : si le nombre de coefficients à estimer, c'est-à-dire si le nombre de coefficients originaux non transmis au décodeur, est trop élevé, alors l'image sera trop dégradée pour pouvoir bénéficier d'une prédiction correcte au niveau du décodeur ; à l'inverse, si ce nombre est trop faible, l'amélioration de compression résultante ne sera pas significative.

Par exemple, les inventeurs ont constaté que la suppression/prédiction de deux coefficients originaux sur un bloc 8x8 de 64 coefficients originaux permettait d'obtenir un bon compromis entre dégradation et compression, quelque soit le débit de transmission. L'étape de sélection 12 permet alors de sélectionner un sous-ensemble de deux coefficients parmi l'ensemble de 64 coefficients originaux.

Selon un exemple non couvert par l'invention, la position des coefficients à estimer dans le bloc transformé est prédéfinie au codeur et au décodeur, par exemple en fonction de la taille des blocs.

Dans ce cas, il n'est pas nécessaire que le codeur insère une information signalant les positions des coefficients originaux du sous-ensemble dans un signal représentatif de l'image ou la séquence vidéo.

Par exemple, dans le cas d'un codeur image de type JPEG, une évaluation statistique a permis de constater que pour un bloc transformé de taille 8x8, les coefficients les plus intéressants à supprimer et estimer sont les coefficients C01 (122) et C10 (121), comme illustré en figure 3.

La sélection des coefficients à estimer peut aussi s'effectuer à travers un procédé d'évaluation connu du codeur et du décodeur. Par exemple, le codeur et le décodeur peuvent évaluer le type d'image traitée, en utilisant éventuellement les images et les blocs de l'image courante précédemment codés, pour déterminer une classe d'image (image lisse, texturée...) et en déduire la position, et éventuellement le nombre, de coefficients à estimer.

Selon l'invention, le codeur peut utiliser la direction de prédiction utilisée pour la prédiction spatiale du bloc à coder et en déduire la position et le nombre de coefficients à prédire. Par exemple, si le bloc à coder a été prédit selon une direction verticale, le bloc résiduel associé comporte majoritairement des motifs horizontaux et l'étape de transformation concentre l'énergie sur les coefficients de la première ligne (comprenant les coefficients C00, ..., C0K). Il est plus judicieux dans ce cas de prédire les coefficients de cette première colonne puisqu'ils concentrent l'énergie du bloc DCT.

Selon une variante, la position des coefficients à prédire est transmise au décodeur par le codeur.

Ainsi, par exemple, dans le cas du codeur JPEG ci-dessus, les deux positions des coefficients C01 et C10 sont transmises dans l'en-tête de l'image.

Pour un codeur vidéo, il est possible de transmettre cette information :

- au niveau séquence : dans ce cas, les coefficients à estimer sont les mêmes pour toutes les images ;
- au niveau image : dans ce cas les coefficients à estimer sont les mêmes pour tous les blocs de l'image, ou pour toutes les images appartenant au même type (par exemple : images I, images P, images B...).

Une signalisation au niveau bloc, bien qu'envisageable, semble trop coûteuse. On préférera dans ce cas utiliser une information locale comme la direction de prédiction pour modifier ou adapter la position et le nombre des coefficients à prédire.

*B) Estimation des coefficients sélectionnés*

Une fois le sous-ensemble de coefficients originaux obtenu, le codeur met en œuvre une estimation 13 des coefficients de ce sous-ensemble (comprenant par exemple les deux coefficients originaux C01 et C10).

Le bloc courant étant un bloc résiduel, l'étape d'estimation 13 met en œuvre les étapes suivantes :

- affectation d'une valeur nulle aux coefficients originaux du sous-ensemble, délivrant un bloc transformé modifié ;
- restauration du bloc transformé modifié.

Selon l'exemple de réalisation décrit ci-après, l'étape de restauration, encore appelée régularisation, met en œuvre une technique de régularisation dans le domaine image, basée sur une minimisation de la variation totale du bloc prédit.

On rappelle ci-après le principe général d'une telle technique de régularisation du signal dans le domaine spatial, basée sur la semi-norme de la variation totale (notée TV).

Le document "Feature-oriented image enhancement using shock filters" de S. Osher and L. Rudin (SIAM J. Numer. Anal., 27:919:940, 1990) décrit plus en détail la technique de restauration basée sur cette norme. Bien entendu, d'autres normes sont envisageables, comme la norme quadratique par exemple.

La semi-norme TV est utilisée dans beaucoup de procédés d'amélioration d'image, notamment pour le débruitage et la réduction du flou (en anglais « debluring »).

Soit $u$ une image dans le domaine spatial et $u(x)$ la valeur d'un pixel de l'image $u$ à la position $x$. L'image $u$ dans le domaine transformé est notée $\alpha(i)$ (notée simplement $\alpha$ par la suite). Le modèle proposé consiste à estimer un sous-ensemble des coefficients DCT de $\alpha$ par leur restauration sous contrainte dans le domaine spatial, c'est-à-dire dans l'image $u$.

Notons $u(\alpha,x)$ l'image obtenue à partir des coefficients DCT de $\alpha$ (c'est-à-dire l'image correspondant à une transformée inverse pour revenir dans le domaine spatial).

La contrainte de régularisation dans le domaine spatial consiste à minimiser la variation totale TV.

La variation totale TV s'exprime sous la forme suivante :

$$TV(u(\alpha,x)) = \int_{\Omega} \left| \nabla_x u(\alpha,x) \right| dx \qquad (1)$$

où $\nabla_x u$ représente le gradient de l'image $u$ à la position $x$.

Pour minimiser la variation totale TV ($\min\{TV(u(\alpha, x))\}$), on calcule la dérivée partielle, ce qui donne :

$$\frac{\partial TV(u(\alpha,x))}{\partial \alpha} = \int_{\Omega} \frac{\partial \left| \nabla_x u(\alpha,x) \right|}{\partial \alpha} dx \qquad (2)$$

Après développement, on obtient :

$$\frac{\partial TV(u(\alpha,x))}{\partial \alpha} = -\int_{\Omega} \nabla_x \cdot \left[ \frac{\nabla_x u(\alpha,x)}{\left| \nabla_x u(\alpha,x) \right|} \right] \phi_{xi} \ dx \qquad (3)$$

où :

$\phi_{xi}$ caractérise le noyau de la transformée DCT ; et

$\nabla_x \cdot \left[ \dfrac{\nabla_x u}{\left| \nabla_x u \right|} \right]$ exprime la courbure de l'image, c'est-à-dire la divergence du gradient normalisé dans le domaine spatial.

Cette formule fait le lien entre la semi-norme de la variation totale TV dans le domaine spatial et les coefficients DCT dans le domaine transformé.

$$\frac{\partial TV(u(\alpha,x))}{\partial \alpha} = 0 \, .$$

Pour $TV(u(\alpha, x)) = 0$, les équations d'Euler-Lagrange associée donnent

Par exemple, la recherche du minimum local s'effectue grâce à un algorithme itératif de type descente de gradient. On note que d'autres méthodes non itératives peuvent également être utilisées.

Soit $\alpha^{TV} = DCT(curv(u))$ (4), exprimant la courbure (curv) de l'image $u$ dans le domaine transformé. A chaque itération $i$ de l'algorithme, les coefficients DCT $\alpha^i$ sont mis à jour de la façon suivante :

$$\alpha^i = \alpha^{i-1} + \gamma_i \alpha_i^{TV} \tag{5}$$

où $\gamma_i$ représente le pas d'apprentissage de l'algorithme (fixe ou variable selon $i$). Les conditions d'arrêts de l'algorithme peuvent être le nombre d'itérations $i$ et/ou la stabilité des coefficients ($\alpha^i - \alpha^{i-1} < \varepsilon$).

Un exemple de calcul de la courbure dans un espace discret est notamment décrit dans le document "Mathematical models for local non-texture inpaintings" de T.F. Chan et J. Shen, SIAM (Journal of Applied Mathematic, vol. 63, no. 3, pp. 1019-1043, 2002).

Plus précisément, si on note u(i,j) la valeur du pixel de l'image à la position (i,j), la courbure obtenue au point

$$curv_{ij} = \nabla_{ij} \cdot \left( \frac{\nabla_{ij} u(i,j)}{\left| \nabla_{ij} u(i,j) \right|} \right) .$$

(i,j) est exprimée par :

Dans un espace discret, une approximation possible est donnée par :

$$curv_{ij} \approx \frac{u(i+1,j) - u(i,j)}{\sqrt{\left(u(i+1,j) - u(i,j)\right)^2 + \left( \frac{u(i+1,j-1) + u(i,j-1) - u(i,j+1) - u(i+1,j+1)}{2} \right)^2}} +$$

$$\frac{u(i,j) - u(i-1,j)}{\sqrt{\left(u(i,j) - u(i-1,j)\right)^2 + \left( \frac{u(i-1,j-1) + u(i,j-1) - u(i,j+1) - u(i-1,j+1)}{2} \right)^2}} +$$

$$\frac{u(i,j-1) - u(i,j)}{\sqrt{\left(u(i,j-1) - u(i,j)\right)^2 + \left( \frac{u(i-1,j-1) + u(i-1,j) - u(i+1,j) - u(i+1,j-1)}{2} \right)^2}} +$$

$$\frac{u(i,j) - u(i,j+1)}{\sqrt{\left(u(i,j) - u(i,j+1)\right)^2 + \left( \frac{u(i-1,j+1) + u(i-1,j) - u(i+1,j) - u(i+1,j+1)}{2} \right)^2}}$$

On applique ci-dessous ce principe général de régularisation du signal selon la semi-norme TV au contexte du codage vidéo.

Plus précisément, on considère un codeur vidéo mettant en œuvre une transformée de type DCT, tel qu'illustré en figure 2 par exemple, et l'algorithme de restauration décrit ci-dessus au cours de l'étape d'estimation 13.

La figure 4 illustre plus précisément la mise en œuvre d'un tel algorithme.

En entrée, l'algorithme reçoit, pour au moins un bloc courant :

- un bloc prédit 41 dans le domaine spatial, issu des opérations de prédiction intra 244 et/ou inter 245 ;
- un bloc transformé 42, formé d'un ensemble de coefficients originaux représentatifs du bloc résiduel dans le domaine transformé ;
- une information 43 de localisation des coefficients DCT à estimer (utilisée pour sélectionner les coefficients originaux formant le sous-ensemble).

En sortie, l'algorithme délivre un bloc transformé modifié, dans le domaine transformé, comprenant :

- aux positions correspondant aux coefficients originaux appartenant au sous-ensemble : des estimations de ces coefficients ;
- aux autres positions : des coefficients originaux représentatifs du bloc résiduel dans le domaine transformé, identiques aux coefficients du bloc transformé 42.

Plus précisément, l'algorithme de restauration met en œuvre les étapes suivantes :

- quantification inverse $Q^{-1}$ 421, appliquée au bloc transformé 42 ;
- affectation 422 d'une valeur nulle aux coefficients originaux Cij du bloc transformé dont la position est identifiée, grâce à l'information de localisation 43, délivrant un bloc transformé modifié. En d'autres termes, on met à zéro, dans le bloc transformé, les coefficients originaux appartenant au sous-ensemble (par exemple les coefficients C01 et C10 identifiés en figure 3) ;

- initialisation 423 d'une variable j pour les itérations, telle que j = 0 ;
- transformation inverse $DCT^{-1}$ 424 du bloc transformé modifié, délivrant un bloc modifié dans le domaine spatial ;
- addition 425 du bloc modifié et du bloc prédit 41 dans le domaine spatial, délivrant un bloc modifié reconstruit ;
- détermination 426 de la courbure de l'image $I_R$ ainsi reconstruite, dans le domaine spatial causal du bloc modifié reconstruit, comme décrit ci-dessus ;
- détermination 427 de la courbure de l'image $I_R$ dans le domaine transformé, selon l'équation (4) ;
- régularisation 428 des coefficients originaux appartenant au sous-ensemble (mis à zéro lors de l'initialisation de la première itération), délivrant des coefficients estimés CPij, en leur ajoutant une valeur proportionnelle à la courbure de l'image $I_R$ déterminée au cours de l'étape de détermination 427 précédente, selon l'équation (5) présentée ci-dessus. On obtient ainsi un nouveau bloc transformé modifié ;
- incrémentation 429 de la variable j pour les itérations.

On teste alors (430) si on a atteint un critère d'arrêt de l'algorithme, comme le nombre d'itération maximal et/ou une stabilité des coefficients originaux régularisés.

Si le critère d'arrêt n'est pas atteint, on retourne à l'opération de transformation inverse $DCT^{-1}$ 424, appliquée au bloc transformé modifié issu de l'étape de régularisation 428.

Si le critère d'arrêt est atteint, on quantifie (431) le bloc transformé modifié issu de l'étape de régularisation 428.

En sortie de l'étape d'estimation 13, on obtient donc un bloc transformé modifié composé :

- de coefficients régularisés (c'est-à-dire estimés) aux positions correspondant aux coefficients originaux sélectionnés lors de l'étape de sélection 12 ;
- de coefficients originaux représentatifs du bloc résiduel dans le domaine transformé, identiques aux coefficients du bloc transformé 42, aux autres positions.

Une implémentation avantageuse de l'algorithme consiste à estimer les coefficients du sous-ensemble itérativement et hiérarchiquement. Ainsi le premier coefficient estimé correspondra au coefficient du sous-ensemble représentant la plus basse fréquence de l'image, et ainsi de suite jusqu'à atteindre les coefficients correspondants aux plus hautes fréquences. A chaque itération et dés lors qu'un coefficient est estimé, le résidu de coefficient est calculé et codé dans le but d'utiliser ce coefficient pour estimer les coefficients suivant selon le processus itératif. Ainsi, selon cette implémentation, on commence par estimer le coefficient du sous-ensemble correspondant à la plus basse fréquence du bloc courant. Le résidu de coefficient de ce coefficient est alors calculé et codé, puis la valeur du coefficient original correspondant est réintégrée dans le bloc courant, et est utilisée pour l'estimation du coefficient suivant.

*C) Détermination et codage des résidus de coefficients*

On décrit désormais l'étape de détermination 14 des résidus de coefficients.

Au cours de cette étape, on détermine une différence entre les coefficients estimés CPij et les coefficients originaux Cij du bloc transformé 42, situés à une même position dans le bloc transformé modifié et dans le bloc transformé.

On obtient de cette façon, pour chaque position définie par le sous-ensemble, un résidu de coefficient ECij.

Les coefficients originaux non estimés et les résidus de coefficient ainsi obtenus sont alors quantifiés au cours de l'opération de quantification Q 232, puis codés au cours de l'opération de codage entropique 23, en lieu et place du bloc résiduel.

Selon ce mode de réalisation de l'invention, on supprime donc volontairement, au codage, des coefficients dont la position est connue (soit prédéterminée, soit choisie de façon à sélectionner les coefficients originaux respectant un critère de qualité prédéterminée). On réalise ensuite une estimation de ces coefficients (au codeur et au décodeur), afin de ne pas les transmettre ou de transmettre seulement le résidu de coefficient qui leur est associé, ce qui permet de compresser plus efficacement le signal.

La solution proposée confère donc une amélioration du codage en termes de performance de compression par rapport à un codeur existant (par exemple H.264/AVC), puisque la quantité d'information à transmettre est moins importante pour une reconstruction du signal rigoureusement identique.

En d'autres termes, l'invention propose une nouvelle méthode d'estimation qui s'intègre au niveau du codage, alors que les techniques existantes ne proposent pas de modifier le codage.

Pour rappel, beaucoup de techniques existantes permettent uniquement d'améliorer l'image au décodage à partir d'un signal initialement identique en sortie du codeur, mais potentiellement dégradé suite à altération due au canal de transmission. Ces techniques de restauration ne prennent donc pas en compte les coefficients restaurés dans un contexte de codage, mais visent uniquement à reconstruire un signal acceptable avant visualisation au décodeur (post-traitement). De plus, dans la plupart des solutions de restauration, les coefficients perdus (leurs positions) ne sont pas connus du décodeur, qui doit procéder en aveugle pour la reconstruction de l'image ou doit disposer d'un module d'identification de la position des coefficients perdus.

En d'autres termes, l'invention propose d'estimer ou prédire certains coefficients du bloc transformé, afin de réduire la quantité d'information transmise.

*5.3 Signal représentatif de l'image ou la séquence d'images*

Le signal issu du codeur, représentatif de l'image ou la séquence d'images codée selon la technique de codage décrite ci-dessus, peut porter une information de localisation spécifique, permettant de signaler la position des coefficients originaux sélectionnés pour former le sous-ensemble.

Comme indiqué précédemment, cette information peut être prévue à différents niveaux : au niveau séquence, au niveau image, ou éventuellement au niveau bloc.

Ainsi, cette information peut être insérée dans une table portant les informations globales de la séquence (dans un champ du SPS - en anglais « Sequence Parameter Set » - pour le codeur H.264 par exemple), sous la forme d'une liste comprenant les positions des N coefficients $C_{ij}$ à estimer du sous-ensemble, par exemple sous forme d'une liste de N positions « absolues » (position n, pour $1 \leq n \leq N$, définie par $i * k + j$ , avec i l'indice de ligne, k la largeur de ligne, et j l'indice de colonne du coefficient dans le bloc transformé). Cette information peut aussi être codée en utilisant un motif de codage de type CPB (en anglais « coded pattern block »), tel que défini dans la norme H.264 précitée.

On note que cette signalisation est facultative dans le cas où le codeur et le décodeur utilisent des positions prédéterminées, et donc connues des deux parties.

*5.4 Fonctionnement du décodeur*

On décrit ci-après les principales étapes mises en œuvre par un décodeur selon l'invention.

On considère par exemple qu'un tel décodeur met en œuvre une transformation de type DCT, comme le codeur associé.

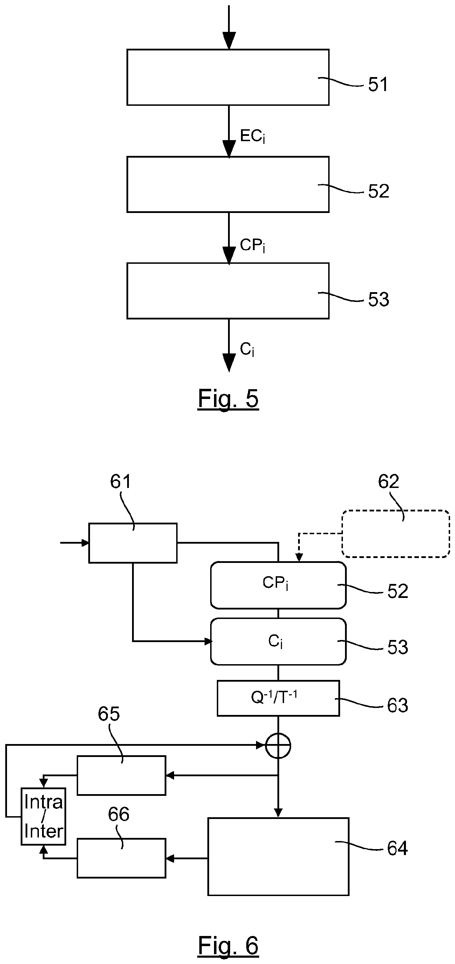

Ainsi, comme illustré en figure 5, un tel décodeur (par exemple un décodeur image ou vidéo) met en œuvre les étapes décrites ci-après, pour la reconstruction d'au moins un bloc transformé formé d'un ensemble de coefficients originaux.

Pour au moins un coefficient original du sous-ensemble de coefficients originaux sélectionnés parmi ledit ensemble, on met en œuvre les étapes suivantes :

- décodage 51 d'un résidu de coefficient associé au coefficient original ;
- estimation 52 du coefficient original, délivrant un coefficient estimé dans le domaine transformé ;
- reconstruction 53 du coefficient original, à partir du résidu de coefficient et du coefficient estimé.

L'étape d'estimation 52 est identique à l'étape d'estimation 13 mise en œuvre au codage, et n'est donc pas décrite plus en détail.

Pour chaque coefficient du sous-ensemble, l'étape de reconstruction 53 consiste à ajouter le résidu de coefficient obtenu à l'issue de l'étape de décodage 51 au coefficient estimé correspondant (étape similaire à l'étape 31 de compensation inverse mise en œuvre au codage).

On note que le sous-ensemble de coefficients originaux sélectionnés est le même que celui identifié lors du codage.

Pour ce faire, deux variantes sont envisagées.

Selon une première variante, non couverte par l'invention, la position des coefficients à estimer est connue du codeur et du décodeur. Ainsi, par exemple, dans le cas du codeur JPEG tel que décrit précédemment, le décodeur et le codeur connaissent tous deux la position des coefficients à estimer (C01 et C10 pour un bloc 8x8, comme illustré en figure 3).

Dans ce cas, le décodeur identifie directement les coefficients appartenant au sous-ensemble, à partir de leur position prédéterminée.

Dans un autre exemple, selon l'invention, le décodeur connaît la direction de prédiction spatiale qui a été utilisée pour réaliser la prédiction spatiale du bloc à coder, et peut utiliser cette information, de la même manière que le codeur, pour en déduire la position et le nombre des coefficients à estimer.

Selon une deuxième variante, le décodeur met en œuvre une étape préalable de lecture d'une information signalant une position des coefficients originaux sélectionnés pour former le sous-ensemble.

Dans ce cas, le décodeur identifie les coefficients appartenant au sous-ensemble, à partir d'une lecture de cette information.

On décrit plus précisément, en relation avec la figure 6, l'architecture d'un décodeur vidéo de type H.264, modifié pour mettre en œuvre l'invention.

Un tel décodeur reçoit en entrée un signal représentatif d'une image ou une séquence d'images codée selon le procédé de codage décrit précédemment, et met en œuvre une opération de décodage entropique 61. Ce décodage 61 permet notamment de décoder le ou les résidus de coefficient véhiculé (s) par le signal et les coefficients originaux du bloc résiduel non estimés au codage.

Comme décrit en relation avec la figure 5, pour la reconstruction d'au moins un bloc transformé, on sélectionne un sous-ensemble de coefficients originaux à estimer, en tenant notamment compte de leur position 62 dans le bloc transformé (soit directement connue du décodeur, soit obtenue à partir d'une information de localisation extraite du signal).

On réalise alors une estimation 52 de ces coefficients, et on reconstruit 53 les coefficients originaux correspondants, en ajoutant les résidus de coefficient aux coefficients estimés correspondants.

A l'issue de cette étape 53, on obtient un bloc transformé reconstruit.

Au cours d'une étape suivante 63, des opérations de quantification inverse $Q^{-1}$ et de transformation inverse $T^{-1}$ sont appliquées au bloc transformé reconstruit, puis des opérations classiques de reconstruction d'images 64, prédiction intra 65 et/ou inter 66 (compensation en mouvement) sont mises en œuvre. Ces opérations sont bien connues de l'Homme du Métier, et décrites plus en détail dans la norme H.264 précitée.

*5.5 Structure du codeur et du décodeur*

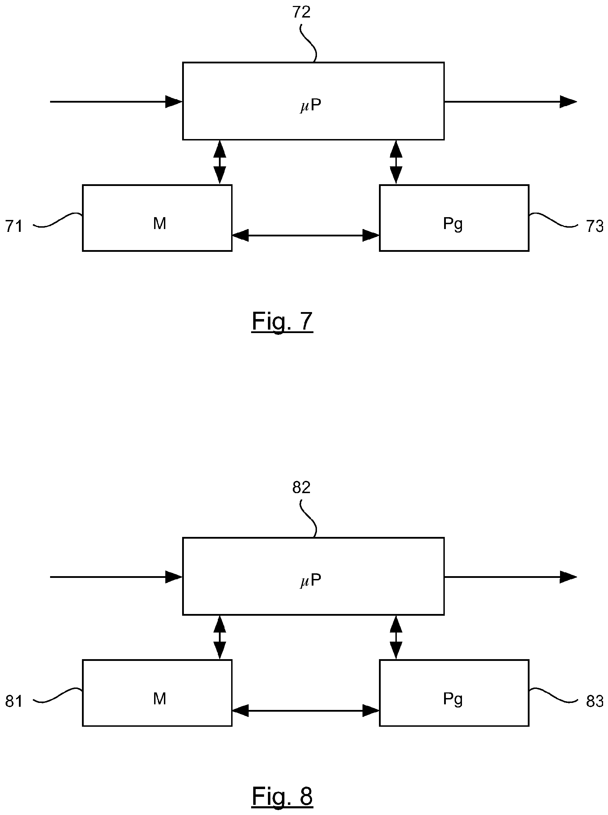

On présente finalement, en relation avec les figures 7 et 8, la structure simplifiée d'un codeur et d'un décodeur mettant respectivement en œuvre une technique de codage et une technique de décodage selon l'un des modes de réalisation décrits ci-dessus.

Par exemple, le codeur comprend une mémoire 71 comprenant une mémoire tampon M, une unité de traitement 72, équipée par exemple d'un processeur P, et pilotée par un programme d'ordinateur Pg 73, mettant en œuvre le procédé de codage selon l'invention.

A l'initialisation, les instructions de code du programme d'ordinateur 73 sont par exemple chargées dans une mémoire RAM avant d'être exécutées par le processeur de l'unité de traitement 72. L'unité de traitement 72 reçoit en entrée au moins une image à coder. Le processeur de l'unité de traitement 72 met en œuvre les étapes du procédé de codage décrit précédemment, selon les instructions du programme d'ordinateur 73, pour coder l'image. Pour cela, le codeur comprend, outre la mémoire 71, des moyens de transformation d'un bloc courant du domaine spatial vers un domaine transformé, des moyens de sélection d'un sous-ensemble de coefficients originaux, des moyens d'estimation d'au moins un coefficient original, des moyens de détermination d'un résidu de coefficient correspondant et des moyens de codage du résidu de coefficient. Ces moyens sont pilotés par le processeur de l'unité de traitement 72.

Le décodeur comprend quant à lui une mémoire 81 comprenant une mémoire tampon M, une unité de traitement 82, équipée par exemple d'un processeur P, et pilotée par un programme d'ordinateur Pg 83, mettant en œuvre le procédé de décodage selon l'invention.

A l'initialisation, les instructions de code du programme d'ordinateur 83 sont par exemple chargées dans une mémoire RAM avant d'être exécutées par le processeur de l'unité de traitement 82. L'unité de traitement 82 reçoit en entrée un signal représentatif d'au moins une image. Le processeur de l'unité de traitement 82 met en œuvre les étapes du procédé de décodage décrit précédemment, selon les instructions du programme d'ordinateur 83, pour décoder et reconstruire l'image. Pour cela, le décodeur comprend, outre la mémoire 81, des moyens de décodage d'au moins un résidu de coefficient associé à un coefficient original, des moyens d'estimation du coefficient original correspondant, et des moyens de reconstruction du coefficient original. Ces moyens sont pilotés par le processeur de l'unité de traitement 82.

**Revendications**

1.  Procédé de codage d'au moins une image découpée en blocs mettant en œuvre, pour au moins un bloc à coder de ladite image :

    une étape de prédiction dudit bloc à coder dans le domaine spatial, délivrant un bloc prédit ;
    une étape de comparaison dudit bloc à coder et dudit bloc prédit, délivrant un bloc résiduel, dit bloc courant,
    une étape de transformation (11) dudit bloc courant du domaine spatial vers un domaine transformé, délivrant un bloc transformé,
    ledit bloc transformé étant formé d'un ensemble de coefficients représentatifs dudit bloc courant, dits coefficients originaux,
    **caractérisé en ce que** ledit procédé de codage met en œuvre une étape de sélection (12) d'un sous-ensemble de coefficients originaux parmi ledit ensemble en fonction d'une direction de prédiction spatiale utilisée dans l'étape de prédiction dudit bloc à coder, et, pour au moins un coefficient original dudit sous-ensemble, les étapes suivantes :

    - estimation (13) dudit coefficient original, délivrant un coefficient estimé dans ledit domaine transformé ;
    - détermination (14) d'un résidu de coefficient, par comparaison dudit coefficient original et dudit coefficient estimé ;
    - codage (15) dudit résidu de coefficient,

    ladite étape d'estimation (13) mettant en œuvre les étapes suivantes :

    - affectation d'une valeur nulle aux coefficients originaux dudit sous-ensemble, délivrant un bloc transformé modifié ;
    - restauration dudit bloc transformé modifié,

    et ladite étape de restauration mettant en œuvre au moins une itération des sous-étapes suivantes :

    - transformation dudit bloc transformé modifié du domaine transformé vers le domaine spatial, délivrant un bloc modifié dans le domaine spatial ;
    - addition dudit bloc modifié et du bloc prédit dans le domaine spatial correspondant, délivrant un bloc modifié reconstruit ;
    - détermination dans le domaine spatial, d'une courbure d'une image reconstruite, comprenant ledit bloc modifié reconstruit ;
    - mise à jour des coefficients originaux dudit sous-ensemble, tenant compte de ladite courbure, transformée du domaine spatial vers le domaine transformé, et dudit bloc transformé modifié, délivrant un nouveau bloc transformé modifié.

2.  Procédé de codage selon la revendication 1, **caractérisé en ce qu'**il comprend une étape d'insertion, dans un signal représentatif de ladite au moins une image, d'au moins une information signalant une position des coefficients originaux dudit sous-ensemble.

3.  Procédé de codage selon la revendication 1, **caractérisé en ce que** ladite étape de restauration traite lesdits coefficients originaux les uns après les autres selon un ordre de fréquence croissante.

4.  Dispositif de codage d'au moins une image découpée en blocs comprenant :

    des moyens de prédiction d'un bloc à coder de ladite image, dans le domaine spatial, délivrant un bloc prédit ;
    des moyens de comparaison dudit bloc à coder et dudit bloc prédit, délivrant un bloc résiduel, dit bloc courant,
    des moyens de transformation (11) dudit bloc courant du domaine spatial vers un domaine transformé, délivrant un bloc transformé,
    ledit bloc transformé étant formé d'un ensemble de coefficients représentatifs dudit bloc courant, dits coefficients originaux,
    **caractérisé en ce qu'**il comprend également :

    - des moyens de sélection (12) d'un sous-ensemble de coefficients originaux parmi ledit ensemble en fonction d'une direction de prédiction spatiale utilisée dans les moyens de prédiction dudit bloc à coder,

- des moyens d'estimation (13) dudit coefficient original, délivrant un coefficient estimé dans ledit domaine transformé ;
- des moyens de détermination (14) d'un résidu de coefficient, par comparaison dudit coefficient original et dudit coefficient estimé ;

les moyens d'estimation mettant en œuvre les étapes suivantes :

- affectation d'une valeur nulle aux coefficients originaux dudit sous-ensemble, délivrant un bloc transformé modifié ;
- restauration dudit bloc transformé modifié,

et ladite étape de restauration mettant en œuvre au moins une itération des sous-étapes suivantes :

- transformation dudit bloc transformé modifié du domaine transformé vers le domaine spatial, délivrant un bloc modifié dans le domaine spatial ;
- addition dudit bloc modifié et du bloc prédit dans le domaine spatial correspondant, délivrant un bloc modifié reconstruit ;
- détermination dans le domaine spatial, d'une courbure d'une image reconstruite, comprenant ledit bloc modifié reconstruit ;
- mise à jour des coefficients originaux dudit sous-ensemble, tenant compte de ladite courbure, transformée du domaine spatial vers le domaine transformé, et dudit bloc transformé modifié, délivrant un nouveau bloc transformé modifié.
- des moyens de codage (15) dudit résidu de coefficient.

5. Procédé de décodage d'au moins une image codée, **caractérisé en ce qu'**il met en œuvre:

- une étape de reconstruction d'au moins un bloc transformé formé d'un ensemble de coefficients originaux, mettant en œuvre les étapes suivantes, pour au moins un coefficient original d'un sous-ensemble de coefficients originaux sélectionnés parmi ledit ensemble en fonction d'une direction de prédiction spatiale utilisée lors d'une étape de prédiction dudit bloc transformé reconstruit:

- décodage (51) d'un résidu de coefficient associé audit coefficient original ;
- estimation (52) dudit coefficient original, délivrant un coefficient estimé dans ledit domaine transformé ;
- reconstruction (53) dudit coefficient original, à partir dudit résidu de coefficient et dudit coefficient estimé ;

- une étape de transformation inverse (64) dudit bloc transformé reconstruit,
- une étape de prédiction (65, 66) et de reconstruction d'images à partir dudit bloc transformé reconstruit issu de ladite étape de transformation inverse,

ladite étape d'estimation (52) mettant en œuvre les étapes suivantes :

- affectation d'une valeur nulle au coefficient original, délivrant un bloc transformé modifié ;
- restauration dudit bloc transformé modifié,

et ladite étape de restauration mettant en œuvre au moins une itération des sous-étapes suivantes :

- transformation dudit bloc transformé modifié du domaine transformé vers le domaine spatial, délivrant un bloc modifié dans le domaine spatial ;
- addition dudit bloc modifié et du bloc prédit dans le domaine spatial correspondant, délivrant un bloc modifié reconstruit ;
- détermination dans le domaine spatial, d'une courbure d'une image reconstruite, comprenant ledit bloc modifié reconstruit ;
- mise à jour du coefficient original, tenant compte de ladite courbure, transformée du domaine spatial vers le domaine transformé, et dudit bloc transformé modifié, délivrant un nouveau bloc transformé modifié.

6. Procédé de décodage de la revendication 5, **caractérisé en ce qu'**il comprend une étape de lecture, dans un signal représentatif de ladite moins une image codée, d'au moins une information signalant une position des coefficients originaux dudit sous-ensemble.

**7.** Dispositif de décodage d'au moins une image codée,
**caractérisé en ce qu'**il comprend :

- des moyens de reconstruction d'au moins un bloc transformé formé d'un ensemble de coefficients originaux, mettant en œuvre, pour au moins un coefficient original d'un sous-ensemble de coefficients originaux sélectionnés parmi ledit ensemble en fonction d'une direction de prédiction spatiale utilisée pour prédire ledit bloc transformé reconstruit:

- des moyens de décodage (51) d'un résidu de coefficient associé audit coefficient original ;
- des moyens d'estimation (52) dudit coefficient original, délivrant un coefficient estimé dans ledit domaine transformé ;
- des moyens de reconstruction (53) dudit coefficient original, à partir dudit résidu de coefficient et dudit coefficient estimé ;

- des moyens de transformation inverse (64) dudit bloc transformé reconstruit,
- des moyens de prédiction (65, 66) et de reconstruction d'images à partir dudit bloc transformé reconstruit issu desdits moyens de transformation inverse,
les moyens d'estimation mettant en œuvre les étapes suivantes :

- affectation d'une valeur nulle au coefficient original, délivrant un bloc transformé modifié ;
- restauration dudit bloc transformé modifié,

et ladite étape de restauration mettant en œuvre au moins une itération des sous-étapes suivantes :

- transformation dudit bloc transformé modifié du domaine transformé vers le domaine spatial, délivrant un bloc modifié dans le domaine spatial ;
- addition dudit bloc modifié et du bloc prédit dans le domaine spatial correspondant, délivrant un bloc modifié reconstruit ;
- détermination dans le domaine spatial, d'une courbure d'une image reconstruite, comprenant ledit bloc modifié reconstruit ;

- mise à jour du coefficient original, tenant compte de ladite courbure, transformée du domaine spatial vers le domaine transformé, et dudit bloc transformé modifié, délivrant un nouveau bloc transformé modifié.

**8.** Programme d'ordinateur comportant des instructions pour la mise en œuvre d'un procédé de codage selon la revendication 1 ou d'un procédé de décodage selon la revendication 5 lorsque ce programme est exécuté par un processeur.

**Patentansprüche**

**1.** Verfahren zur Codierung mindestens eines in Blöcke aufgeteilten Bildes, bei dem für mindestens einen zu codierenden Block des Bildes durchgeführt werden:

ein Schritt der Prädiktion des zu codierenden Blocks im Raumbereich, welcher einen prädizierten Block liefert;
ein Schritt des Vergleichs des zu codierenden Blocks und des prädizierten Blocks, welcher einen Restblock liefert, aktueller Block genannt,
ein Schritt der Transformation (11) des aktuellen Blocks aus dem Raumbereich in einen transformierten Bereich, welcher einen transformierten Block liefert,
wobei der transformierte Block von einer Menge von Koeffizienten gebildet wird, die für den aktuellen Block repräsentativ sind, ursprüngliche Koeffizienten genannt,
**dadurch gekennzeichnet, dass** bei dem Verfahren zur Codierung ein Schritt der Auswahl (12) einer Teilmenge von ursprünglichen Koeffizienten aus der Menge in Abhängigkeit von einer Richtung räumlicher Prädiktion, die im Schritt der Prädiktion des zu codierenden Blocks verwendet wurde, und, für mindestens einen ursprünglichen Koeffizienten der Teilmenge, die folgenden Schritte durchgeführt werden:

- Schätzung (13) des ursprünglichen Koeffizienten, welche einen geschätzten Koeffizienten im transformierten Bereich liefert;

- Bestimmung (14) eines Restkoeffizienten durch Vergleich des ursprünglichen Koeffizienten und des geschätzten Koeffizienten;
- Codierung (15) des Restkoeffizienten,

wobei im Schritt der Schätzung (13) die folgenden Schritte durchgeführt werden:

- Zuweisung eines Wertes null zu den ursprünglichen Koeffizienten der Teilmenge, was einen modifizierten transformierten Block liefert;
- Wiederherstellung des modifizierten transformierten Blocks,

und wobei im Schritt der Wiederherstellung mindestens eine Iteration der folgenden Teilschritte durchgeführt wird:

- Transformation des modifizierten transformierten Blocks aus dem transformierten Bereich in den Raumbereich, was einen modifizierten Block im Raumbereich liefert;
- Addition dieses modifizierten Blocks und des entsprechenden prädizierten Blocks im Raumbereich, was einen rekonstruierten modifizierten Block liefert;
- Bestimmung, im Raumbereich, einer Krümmung eines rekonstruierten Bildes, das den rekonstruierten modifizierten Block umfasst;
- Aktualisierung der ursprünglichen Koeffizienten der Teilmenge unter Berücksichtigung der aus dem Raumbereich in den transformierten Bereich transformierten Krümmung und des modifizierten transformierten Blocks, was einen neuen modifizierten transformierten Block liefert.

2. Verfahren zur Codierung nach Anspruch 1, **dadurch gekennzeichnet, dass** es einen Schritt der Einfügung, in ein für das mindestens eine Bild repräsentatives Signal, mindestens einer Information umfasst, die eine Position der ursprünglichen Koeffizienten der Teilmenge angibt.

3. Verfahren zur Codierung nach Anspruch 1, **dadurch gekennzeichnet, dass** im Schritt der Wiederherstellung die ursprünglichen Koeffizienten nacheinander in einer Reihenfolge zunehmender Frequenz verarbeitet werden.

4. Vorrichtung zur Codierung mindestens eines in Blöcke aufgeteilten Bildes, welche umfasst:

Mittel zur Prädiktion eines zu codierenden Blocks des Bildes im Raumbereich, welche einen prädizierten Block liefern;
Mittel zum Vergleich des zu codierenden Blocks und des prädizierten Blocks, welche einen Restblock liefern, aktueller Block genannt,
Mittel zur Transformation (11) des aktuellen Blocks aus dem Raumbereich in einen transformierten Bereich, welche einen transformierten Block liefern,
wobei der transformierte Block von einer Menge von Koeffizienten gebildet wird, die für den aktuellen Block repräsentativ sind, ursprüngliche Koeffizienten genannt,
**dadurch gekennzeichnet, dass** sie außerdem umfasst:

- Mittel zur Auswahl (12) einer Teilmenge von ursprünglichen Koeffizienten aus der Menge in Abhängigkeit von einer Richtung räumlicher Prädiktion, die in den Mitteln zur Prädiktion des zu codierenden Blocks verwendet wurde,
- Mittel zur Schätzung (13) des ursprünglichen Koeffizienten, welche einen geschätzten Koeffizienten im transformierten Bereich liefern;
- Mittel zur Bestimmung (14) eines Restkoeffizienten durch Vergleich des ursprünglichen Koeffizienten und des geschätzten Koeffizienten;

wobei die Mittel zur Schätzung die folgenden Schritte durchführen:

- Zuweisung eines Wertes null zu den ursprünglichen Koeffizienten der Teilmenge, was einen modifizierten transformierten Block liefert;
- Wiederherstellung des modifizierten transformierten Blocks,

und wobei im Schritt der Wiederherstellung mindestens eine Iteration der folgenden Teilschritte durchgeführt wird:

- Transformation des modifizierten transformierten Blocks aus dem transformierten Bereich in den Raumbereich, was einen modifizierten Block im Raumbereich liefert;
- Addition dieses modifizierten Blocks und des entsprechenden prädizierten Blocks im Raumbereich, was einen rekonstruierten modifizierten Block liefert;
- Bestimmung, im Raumbereich, einer Krümmung eines rekonstruierten Bildes, das den rekonstruierten modifizierten Block umfasst;
- Aktualisierung der ursprünglichen Koeffizienten der Teilmenge unter Berücksichtigung der aus dem Raumbereich in den transformierten Bereich transformierten Krümmung und des modifizierten transformierten Blocks, was einen neuen modifizierten transformierten Block liefert;
- Mittel zur Codierung (15) des Restkoeffizienten.

5. Verfahren zur Decodierung mindestens eines codierten Bildes, **dadurch gekennzeichnet, dass** bei ihm durchgeführt werden:

- ein Schritt der Rekonstruktion mindestens eines transformierten Blocks, der von einer Menge von ursprünglichen Koeffizienten gebildet wird, bei dem die folgenden Schritte für mindestens einen ursprünglichen Koeffizienten einer Teilmenge von ursprünglichen Koeffizienten durchgeführt werden, die aus der Menge in Abhängigkeit von einer Richtung räumlicher Prädiktion, die in einem Schritt der Prädiktion des rekonstruierten transformierten Blocks verwendet wird, ausgewählt werden:

- Decodierung (51) eines Restkoeffizienten, der dem ursprünglichen Koeffizienten zugeordnet ist;
- Schätzung (52) des ursprünglichen Koeffizienten, welche einen geschätzten Koeffizienten im transformierten Bereich liefert;
- Rekonstruktion (53) des ursprünglichen Koeffizienten anhand des Restkoeffizienten und des geschätzten Koeffizienten;

- ein Schritt der inversen Transformation (64) des rekonstruierten transformierten Blocks,
- ein Schritt der Prädiktion (65, 66) und Rekonstruktion von Bildern anhand des rekonstruierten transformierten Blocks, der im Schritt der inversen Transformation erhalten wurde,

wobei im Schritt der Schätzung (52) die folgenden Schritte durchgeführt werden:

- Zuweisung eines Wertes null zu dem ursprünglichen Koeffizienten, was einen modifizierten transformierten Block liefert;
- Wiederherstellung des modifizierten transformierten Blocks,

und wobei im Schritt der Wiederherstellung mindestens eine Iteration der folgenden Teilschritte durchgeführt wird:

- Transformation des modifizierten transformierten Blocks aus dem transformierten Bereich in den Raumbereich, was einen modifizierten Block im Raumbereich liefert;
- Addition dieses modifizierten Blocks und des entsprechenden prädizierten Blocks im Raumbereich, was einen rekonstruierten modifizierten Block liefert;
- Bestimmung, im Raumbereich, einer Krümmung eines rekonstruierten Bildes, das den rekonstruierten modifizierten Block umfasst;
- Aktualisierung des ursprünglichen Koeffizienten unter Berücksichtigung der aus dem Raumbereich in den transformierten Bereich transformierten Krümmung und des modifizierten transformierten Blocks, was einen neuen modifizierten transformierten Block liefert.

6. Verfahren zur Decodierung nach Anspruch 5, **dadurch gekennzeichnet, dass** es einen Schritt des Lesens, in einem für das mindestens eine codierte Bild repräsentativen Signal, mindestens einer Information umfasst, die eine Position der ursprünglichen Koeffizienten der Teilmenge angibt.

7. Vorrichtung zur Decodierung mindestens eines codierten Bildes, **dadurch gekennzeichnet, dass** sie umfasst:

- Mittel zur Rekonstruktion mindestens eines transformierten Blocks, der von einer Menge von ursprünglichen Koeffizienten gebildet wird, welche für mindestens einen ursprünglichen Koeffizienten einer Teilmenge von ursprünglichen Koeffizienten, die aus der Menge in Abhängigkeit von einer Richtung räumlicher Prädiktion, die zur Prädiktion des rekonstruierten transformierten Blocks verwendet wird, ausgewählt wurden, einsetzen:

- Mittel zur Decodierung (51) eines Restkoeffizienten, der dem ursprünglichen Koeffizienten zugeordnet ist;
- Mittel zur Schätzung (52) des ursprünglichen Koeffizienten, welche einen geschätzten Koeffizienten im transformierten Bereich liefern;
- Mittel zur Rekonstruktion (53) des ursprünglichen Koeffizienten anhand des Restkoeffizienten und des geschätzten Koeffizienten;

- Mittel zur inversen Transformation (64) des rekonstruierten transformierten Blocks,
- Mittel zur Prädiktion (65, 66) und Rekonstruktion von Bildern anhand des rekonstruierten transformierten Blocks, der von den Mitteln zur inversen Transformation erhalten wurde,
wobei die Mittel zur Schätzung die folgenden Schritte durchführen:

- Zuweisung eines Wertes null zu dem ursprünglichen Koeffizienten, was einen modifizierten transformierten Block liefert;
- Wiederherstellung des modifizierten transformierten Blocks,

und wobei im Schritt der Wiederherstellung mindestens eine Iteration der folgenden Teilschritte durchgeführt wird:

- Transformation des modifizierten transformierten Blocks aus dem transformierten Bereich in den Raumbereich, was einen modifizierten Block im Raumbereich liefert;
- Addition dieses modifizierten Blocks und des entsprechenden prädizierten Blocks im Raumbereich, was einen rekonstruierten modifizierten Block liefert;
- Bestimmung, im Raumbereich, einer Krümmung eines rekonstruierten Bildes, das den rekonstruierten modifizierten Block umfasst;

- Aktualisierung des ursprünglichen Koeffizienten unter Berücksichtigung der aus dem Raumbereich in den transformierten Bereich transformierten Krümmung und des modifizierten transformierten Blocks, was einen neuen modifizierten transformierten Block liefert.

8. Computerprogramm, welches Anweisungen zur Durchführung eines Verfahrens zur Codierung nach Anspruch 1 oder eines Verfahrens zur Decodierung nach Anspruch 5, wenn dieses Programm von einem Prozessor ausgeführt wird, umfasst.

## Claims

1. Method for coding at least one image subdivided into blocks implementing, for at least one block to be coded of said image:

a step of prediction of said block to be coded in the space domain, delivering a predicted block;
a step of comparison of said block to be coded and of said predicted block, delivering a residual block, called current block,
a step of transformation (11) of said current block of the space domain to a transformed domain, delivering a transformed block,
said transformed block being formed by a set of coefficients representative of said current block, called original coefficients,
**characterized in that** said coding method implements a step of selection (12) of a subset of original coefficients from among said set as a function of a direction of spatial prediction used in the step of prediction of said block to be coded and, for at least one original coefficient of said subset, the following steps:

- estimation (13) of said original coefficient, delivering an estimated coefficient in said transformed domain;
- determination (14) of a coefficient residue, by comparison of said original coefficient and of said estimated coefficient;
- coding (15) of said coefficient residue,

said estimation step (13) implementing the following steps:

- assignment of a zero value to the original coefficients of said subset, delivering a modified transformed block;
- restoration of said modified transformed block,

and said restoration step implementing at least one iteration of the following substeps:

- transformation of said modified transformed block from the transformed domain to the space domain, delivering a modified block in the space domain;
- addition of said modified block and of the predicted block in the corresponding space domain, delivering a reconstructive modified block;
- determination in the space domain, of a curvature of a reconstructed image, comprising said reconstructed modified block;
- updating of the original coefficients of said subset, taking account of said curvature, transformed from the space domain to the transformed domain, and of said modified transformed block, delivering a new modified transformed block,

2. Coding method according to Claim 1, **characterized in that** it comprises a step of insertion, in a signal representative of said at least one image, of at least one piece of information signalling a position of the original coefficients of said subset.

3. Coding method according to Claim 1, **characterized in** said restoration step processes said original coefficients one after the other according to an increase in order of frequency.

4. Device for coding at least one image subdivided into blocks comprising:

means for predicting a block to be coded of said image, in the space domain, delivering a predicted block;
means for comparing said block to be coded and said predicted block, delivering a residual block, called current block,
means for transforming (11) said current block from the space domain to a transformed domain, delivering a transformed block,
said transformed block being formed by a set of coefficients representative to said current block, called original coefficients,
**characterized in that** it also comprises:

- means for selecting (12) a subset of original coefficients from among said set as a function of a direction of spatial prediction used in the means for predicting said block to be coded,
- means for estimating (13) said original coefficient, delivering an estimated coefficient in said transformed domain;
- means for determining (14) a coefficient residue, by comparing said original coefficient and of said estimated coefficient;

the estimation means implementing the following steps:

- assignment of a zero value to the original coefficients of said subset, delivering a modified transformed block;
- restoration of said modified transformed block,

and said restoration step implementing at least one iteration of the following substeps:

- transformation of said modified transformed block from the transformed domain to the space domain, delivering a modified block in the space domain;
- addition of said modified block and of said predicted block in the corresponding space domain, delivering a reconstructive modified block;
- determination in the space domain, of a curvature of a reconstructed image, comprising said reconstructed modified block;
- updating of the original coefficients of said subset, taking account of said curvature, transformed from the space domain to the transformed domain, and of said modified transformed block, delivering a new modified transformed block,
- means for coding (15) said coefficient residue.

**5.** Method for decoding at least one coded image, **characterized in that** it implements:

- a step of reconstruction of at least one transformed block formed by a set of original coefficients, implementing the following steps, for at least one original coefficient of a subset of original coefficients selected from among said set as a function of a direction of spatial prediction used in a step of prediction of said reconstructed transformed block:

- decoding (51) of a coefficient residue associated with said original coefficient;
- estimation (52) of said original coefficient, delivering an estimated coefficient in said transformed domain;
- reconstruction (53) of said original coefficient, from said coefficient residue and from said estimated coefficient;

- a step of reverse transformation (64) of said reconstructed transformed block,
- a step of prediction (65, 66) and of reconstruction of images from said reconstructed transformed block derived from said reverse transformation step,

said estimation step (52) implementing the following steps:

- assignment of a zero value to the original coefficient, delivering a modified transformed block;
- restoration of said modified transformed block,

and said restoration step implementing at least one iteration of the following substeps:

- transformation of said modified transformed block from the transformed domain to the space domain, delivering a modified block in the space domain;
- addition of said modified block and of the predicted block in the corresponding space domain, delivering a reconstructed modified block;
- determination in the space domain, of a curvature of a reconstructed image, comprising said reconstructed modified block;
- updating of the original coefficient, taking account of said curvature, transformed from the space domain to the transformed domain, and of said modified transformed block, delivering a new modified transformed block.

**6.** Decoding method of Claim 5, **characterized in that** it comprises a step of reading, in a signal representative of said at least one coded image, of at least one piece of information signalling a position of the original coefficients of said subset.

**7.** Device for decoding at least one coded image, **characterized in that** it comprises:

- means for reconstructing at least one transformed block formed by a set of original coefficients, implementing, for at least one original coefficient of a subset of original coefficients selected from among said set as a function of a direction of spatial prediction used to predict said reconstructed transformed block:

- means for decoding (51) a coefficient residue associated with said original coefficient;
- means for estimating (52) said original coefficient, delivering an estimated coefficient in said transformed domain;
- means for reconstructing (53) said original coefficient, from said coefficient residue and from said estimated coefficient;

- means for reverse transforming (64) said reconstructed transformed block,
- means for predicting (65, 66) and reconstructing images from said reconstructed transformed block derived from said reverse transformation means,
the estimation means implementing the following steps:

- assignment of a zero value to the original coefficient, delivering a modified transformed block;
- restoration of said modified transformed block,

and said restoration step implementing at least one iteration of the follow substeps:

21

- transformation of said modified transformed block from the transformed domain to the space domain, delivering a modified block in the space domain;
- addition of said modified block and of the predicted block in the corresponding space domain, delivering a reconstructed modified block;
- determination in the space domain, of a curvature of a reconstructed image, comprising said reconstructed modified block;

- updating of the original coefficient, taking account of said curvature, transformed from the space domain to the transformed domain, and of said modified transformed block, delivering a new modified transformed block.

8. Computer program comprising instructions for implementing a coding method according to Claim 1 or a decoding method according to Claim 5 when this program is run by a processor.

Fig. 1

Fig. 2

Fig. 3

Fig. 4

Fig. 5

Fig. 6

72

μP

71

M

Pg

73

Fig. 7

82

μP

81

M

Pg

83

Fig. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0843484 B1

- EP 1081958 A1

**Littérature non-brevet citée dans la description**

- Advanced video coding for generic audio-visual services. *H.264 JVT - ISO/IEC 14496-10 AVC - ITU-T Recommendation H.264,* 11 Juillet 2007
- **S. OSHER ; L. RUDIN.** Feature-oriented image enhancement using shock filters. *SIAM J. Numer. Anal.,* 1990, vol. 27 (919), 940

- **T.F. CHAN ; J. SHEN.** Mathematical models for local non-texture inpaintings. *SIAM (Journal of Applied Mathematic,* 2002, vol. 63 (3), 1019-1043